# EUROPÄISCHE PATENTANMELDUNG

(11) **EP 4 059 775 A1**
(43) Veröffentlichungstag der Anmeldung: **21.09.2022**
(21) Anmeldenummer: 21163364.9
(22) Anmeldetag: 18.03.2021
(51) Int. Cl.: B60P 7/08

(54) **AUFBAU EINES NUTZFAHRZEUGS MIT FUNKTIONSSCHIENE UND NUTZFAHRZEUG MIT AUFBAU**

(71) Anmelder: Schmitz Cargobull AG, 48341 Altenberge (DE)
(72) Erfinder: DAHLHAUS, Andreas, 48712 Gescher (DE); VINHAGE, Niclas, 48565 Steinfurt (DE)
(74) Vertreter: Cohausz & Florack

(57) **Zusammenfassung**

Beschrieben und dargestellt ist ein Aufbau (2) eines Nutzfahrzeugs (1), insbesondere Lastkraftwagen, Anhänger oder Sattelauflieger, umschließend einen Laderaum (8), insbesondere in Form eines Kofferaufbaus, mit einem Ladeboden (9) und wenigstens einem an einer Seitenwand (5) des Aufbaus (2) vorgesehenen Strukturelement (11) und wenigstens einer sich an dem wenigstens einen Strukturelement (11) abstützenden Funktionsschiene (15), wobei das wenigstens eine Strukturelement (11) wenigstens abschnittsweise eine sich wenigstens im Wesentlichen senkrecht zum Ladeboden (9) des Aufbaus (2) erstreckende und zum Laderaum (8) hin offene Aufnahme (14) aufweist, wobei die wenigstens eine Funktionsschiene (15) in der Aufnahme (14) aufgenommen und mit der Aufnahme (14) verklebt ist, wobei die wenigstens eine Funktionsschiene (15) als Alustrangpressprofil ausgebildet ist. Damit eine zuverlässige, zugleich aber einfachere Fertigung des Aufbaus und damit des Nutzfahrzeugs möglich ist, ist vorgesehen, dass die wenigstens eine Funktionsschiene (15) wenigstens einen Klemmsteg aufweist und dass der wenigstens eine Klemmsteg (34) derart klemmend in Anlage an der Aufnahme (14) anliegt, so dass die Funktionsschiene (15) wenigstens teilweise gegenüber einem Auszug aus der Aufnahme (14) in Richtung des Laderaums (8) gesichert ist.

## Beschreibung

Die Erfindung betrifft einen Aufbau eines Nutzfahrzeugs, insbesondere Lastkraftwagen, Anhänger oder Sattelauflieger, umschließend einen Laderaum, insbesondere in Form eines Kofferaufbaus, mit einem Ladeboden und wenigstens einem an einer Seitenwand des Aufbaus vorgesehenen Strukturelement und wenigstens einer sich an dem wenigstens einen Strukturelement abstützenden Funktionsschiene, wobei das wenigstens eine Strukturelement wenigstens abschnittsweise eine sich wenigstens im Wesentlichen senkrecht zum Ladeboden des Aufbaus erstreckende und zum Laderaum hin offene Aufnahme aufweist, wobei die wenigstens eine Funktionsschiene in der Aufnahme aufgenommen und mit der Aufnahme verklebt ist, wobei die wenigstens eine Funktionsschiene als Alustrangpressprofil ausgebildet ist. Die Erfindung betrifft weiter ein Nutzfahrzeug, insbesondere Lastkraftwagen, Anhänger oder Sattelauflieger, mit einem solchen Aufbau.

Nutzfahrzeuge sind in unterschiedlichen Ausgestaltungen, etwa in Form von Lastkraftwagen, Anhängern oder Sattelaufliegern, bekannt. Dabei sind die Nutzfahrzeuge unabhängig von ihrer Ausgestaltung insbesondere für den Transport von Gütern, also der zu transportierenden Ladung, überwiegend im öffentlichen Straßenverkehr vorgesehen. Zu diesem Zweck weisen die bekannten Nutzfahrzeuge ein Chassis, ein mit dem Chassis verbundenes Fahrwerk und einen von dem Chassis getragenen Aufbau auf, welcher einen Laderaum bereitstellt für die Aufnahme der zu transportierenden Ladung. So sind beispielsweise Planenaufbauten bekannt, die wenigstens eine Plane zum Verschließen wenigstens einer Seite und/oder eines Dachs des Planenaufbaus aufweisen. Wenn eine Plane entlang einer Seitenwand verschoben werden kann, spricht man auch von sogenannten Curtainsidern.

Im Gegensatz dazu sind bei sogenannten Kofferaufbauten die Seitenwände und das Dach durch feste Wände verschlossen. Zudem ist rückwärtig ein Türrahmen in Form eines Rückwandrahmens vorgesehen, an dem zwei Türen in Form von Rückwandtüren gehalten und in dem in der geschlossenen Stellung der Türen die Türen aufgenommen sind. Gegenüber von dem Rückwandrahmen ist eine Stirnwand vorgesehen. Dabei können entsprechende Stirnwände und Rückwände in gleicher Weise bei Planenaufbauten und bei Kofferaufbauten vorgesehen sein.

Bei Kofferaufbauten können die Seitenwände, das Dach, die Stirnwand, der Boden und/oder die Türen in Form von mehrschichtigen Paneelen aufgebaut sein, die äußere strukturgebende Decklagen und dazwischen eine Kernlage aus geschäumtem Kunststoff umfassen. Die entsprechenden Decklagen können bedarfsweise selbst jeweils mehrlagig ausgebildet sein und dienen der Aussteifung der Paneele, weshalb die Decklagen meist wenigstens eine Schicht aus einem Metall und/oder einem faserverstärkten Kunststoff aufweisen. Da die etwaig vorgesehene Kernlage aus einem geschäumten Kunststoff eine hohe thermische Isolation bereitstellen kann, sind entsprechende Kofferaufbauten insbesondere auch für den Transport von temperaturempfindlichen Gütern, also beispielsweise für den sogenannten Kühltransport, geeignet.

Dieselben Kofferaufbauten können auch für den Transport von feuchtigkeitsempfindlichen Gütern, also den sogenannten Trockentransport, verwendet werden. Da hier jedoch eine thermische Isolation des Laderaums bedarfsweise entbehrlich ist, können die Aufbauten auch einschalig mit einem festen Seitenwandpaneel und mit die Seitenwand aussteifenden Ständerelementen ausgebildet sein.

Aufbauten von Nutzfahrzeugen sind zudem regelmäßig mit Funktionsschienen versehen, an denen beispielsweise eine Ladungssicherung vorgenommen werden kann. Dann weisen die Funktionsschienen regelmäßig Öffnungen auf, um dort Haken von Ladungssicherungsmitteln wie beispielsweise Spanngurten einhängen zu können. Die Funktionsschienen können alternativ oder zusätzlich aber auch als sogenannte Doppelstockschienen ausgebildet sein. Diese Doppelstockschienen dienen der Aufnahme von sogenannten Doppelstockbalken, die sich an den Doppelstockschienen abstützen und sich quer durch den Laderaum zur gegenüberliegenden Seitenwand erstrecken, wo die Doppelstockbalken dann wiederum in einer weiteren Doppelstockschiene gehalten sind. Die Doppelstockbalken greifen dabei meist formschlüssig in Öffnungen der Doppelstockschienen ein und werden so mit einem nennenswerten Abstand zum Ladeboden fixiert. Dies erlaubt den Transport von zwei niedrigen Paletten übereinander. Die untere Palette steht dabei auf dem Ladeboden des Aufbaus auf, während die obere Palette meist auf zwei voneinander um etwas weniger als eine Palettenlänge beabstandet vorgesehene Doppelstockbalken aufgesetzt wird.

Um die Kräfte von einer Funktionsschiene zuverlässig ableiten zu können, sind die Funktionsschienen meist in einer Aufnahme eines entsprechend stabilen Strukturelements aufgenommen, wobei sich die Aufnahme dann typischerweise senkrecht zum Ladeboden erstreckt und zum Laderaum offen ist. Von der Seite des Laderaums kann die Funktionsschiene mithin in der Aufnahme montiert werden, so dass die Funktionsschiene nicht in den Laderaum vorsteht und dort nicht mit der Ladung beim Verladen kollidieren kann. Die Funktionsschienen, bei denen es sich aus Gewichtsgründen oft um solche in Form eines Alustrangpressprofils handelt, sind dabei regelmäßig mit den Aufnahmen verklebt, um eine dauerhafte und feste Verbindung zwischen der Aufnahme und der Funktionsschiene bereitzustellen.

Verklebungen haben aber in diesem Zusammenhang den grundsätzlichen Nachteil, dass das Aushärten des verwendeten Klebstoffs eine gewisse Zeit benötigt, in der die weitere Fertigung ruhen oder so gestaltet sein muss, dass es nicht zu einer versehentlichen Verschiebung der Funktionsschiene in der Aufnahme oder gar zu einem Herausfallen der Funktionsschiene aus der Aufnahme kommen kann. Die aus dem Stand der Technik bekannten Lösungen sind jedoch noch nicht zufriedenstellend.

Daher liegt der vorliegenden Erfindung die Aufgabe zugrunde, den Aufbau und das Nutzfahrzeug jeweils der eingangs genannten und zuvor näher erläuterten Art derart auszugestalten und weiterzubilden, dass eine zuverlässige, zugleich aber einfachere Fertigung des Aufbaus und damit des Nutzfahrzeugs möglich ist.

Diese Aufgabe ist bei einem Aufbau nach dem Oberbegriff von Anspruch 1 dadurch gelöst, dass die wenigstens eine Funktionsschiene wenigstens einen Klemmsteg aufweist und dass der wenigstens eine Klemmsteg derart klemmend in Anlage an der Aufnahme anliegt, so dass die Funktionsschiene wenigstens teilweise gegenüber einem Auszug aus der Aufnahme in Richtung des Laderaums gesichert ist.

Erfindungsgemäß ist also vorgesehen, dass die Funktionsschiene wenigstens teilweise durch eine Klemmung in der Aufnahme des Strukturelements gehalten ist. Diese Klemmung kann die Funktionsschiene insbesondere dann in Position in der Aufnahme des Strukturelements halten, während der Klebstoff, mit dem die Funktionsschiene in der Aufnahme verklebt wird, noch nicht ausgehärtet ist. Es ist also nicht zwingend erforderlich, dass die Funktionsschiene ausschließlich durch eine Klemmung in der Aufnahme gehalten ist. Dies wird bevorzugt schon dann nicht mehr der Fall sein, wenn der Klebstoff zwischen der Funktionsschiene und der Aufnahme ausgehärtet ist. Danach wird die Funktionsschiene nämlich wenigstens im Wesentlichen durch die Klebeverbindung in der Aufnahme gehalten. Auf eine Klemmung der Funktionsschiene in der Aufnahme könnte dann mithin auch verzichtet werden.

Durch das Aushärten des Klebstoffs in der Klebeverbindung zwischen der Funktionsschiene und der Aufnahme fällt aber das Klemmen zwischen der Funktionsschiene und der Aufnahme nicht einfach weg. Anders ausgedrückt bleibt die Klemmung bestehen, auch wenn die Funktionsschiene ohne diese Klemmung fest und dauerhaft in der Aufnahme gehalten bliebe. Dieser Umstand soll gemeint sein, wenn vorliegend davon die Rede ist, dass der wenigstens eine Klemmsteg derart klemmend in Anlage an der Aufnahme anliegt, so dass die Funktionsschiene wenigstens teilweise gegenüber einem Auszug aus der Aufnahme in Richtung des Laderaums gesichert ist.

Eine wenigstens teilweise Klemmung kann aber auch im Falle einer Rastverbindung vorhanden sein. Unabhängig von der Frage, ob die Verklebung zwischen der Funktionsschiene und der Aufnahme schon hinreichend fest ist oder nicht, ist die Funktionsschiene bei einer entsprechenden Rastverbindung wenigstens teilweise formschlüssig in der Aufnahme gehalten. Aber auch dann ist die Funktionsschiene zusätzlich in die Aufnahme eingeklemmt, so dass der wenigstens eine Klemmsteg mithin derart klemmend in Anlage an der Aufnahme anliegt, so dass die Funktionsschiene wenigstens teilweise gegenüber einem Auszug aus der Aufnahme in Richtung des Laderaums gesichert ist.

Durch den Klemmsteg wird also eine definierte Verformung der Funktionsschiene beim Einsetzen in die Aufnahme des Strukturelements sichergestellt, die die Funktionsschiene in der Aufnahme sicher halten kann, während die Fertigungsprozesse weitergehen. Durch die entsprechende Klemmung besteht nicht die Gefahr, dass sich die Funktionsschiene währenddessen versehentlich in der Aufnahme verschiebt oder gar aus der Aufnahme herausfallen kann. Da der Klemmsteg zudem durch das Strangpressen der Funktionsschiene ausgebildet wird, lässt sich eine Klemmleiste bereitstellen, die eine hinreichende Flexibilität bei ausreichender Steifigkeit bereitstellt, um ein zuverlässiges Fügen der Klemmverbindung sicherzustellen. Die Flexibilität wird benötigt, um die Funktionsschiene trotz der zu berücksichtigenden Toleranzen und des nur bedingt reproduzierbaren Einsetzens der Funktionsschiene in die Aufnahme sicher in der Aufnahme zu halten. Dabei muss sichergestellt werden, dass die Klemmleiste nicht bricht und zugleich an der Innenseite der Aufnahme anliegt. Die hinreichende Steifigkeit sorgt dagegen dafür, dass die in Richtung der Aufnahme ausgeübte Rückstellkraft hinreichend groß ist, um die Funktionsschiene zuverlässig in Position zu halten, während der Klebstoff zwischen der Funktionsschiene und der Aufnahme noch nicht ausgehärtet ist.

Bei einer ersten besonders bevorzugten Ausgestaltung des Aufbaus ist die wenigstens eine Aufnahme in einem Querschnitt senkrecht zur Längserstreckung der Aufnahme wenigstens im Wesentlichen U-förmig ausgebildet. Diese U-Form erlaubt einerseits die einfache Aufnahme der Funktionsschiene und zugleich eine stabile Ausgestaltung des Strukturelements zur Aufnahme und Ableitung hoher Kräfte. Dabei bietet die U-Form einen wesentlichen Vorteil darin, dass die Aufnahme einen stabilen unteren U-Quersteg aufweisen und damit als mehr oder weniger geschlossenes Profil ausgebildet sein kann. Wenn die Aufnahme bzw. das Strukturelement neben der U-Form noch im Sinne eines Hutprofils ausgebildet ist, so lässt sich die Aufnahme zweckmäßig in das Strukturelement integrieren und wird die Aufnahme bzw. das Strukturelement infolge einer etwaigen, entsprechenden Abkantung noch weiter ausgesteift. Für eine möglichst hohe Stabilität des Strukturelements ist es grundsätzlich bevorzugt, wenn das Strukturelement aus Stahl gefertigt ist. Der Einfachheit halber bietet sich dabei eine Fertigung des Strukturelements aus einem Stahlblech an.

Damit die Funktionsschiene sicher in der Aufnahme gehalten ist, kann die wenigstens eine Aufnahme vom Laderaum aus gesehen wenigsten einen Hinterschnitt aufweisen. Der Hinterschnitt ergibt sich dabei, wenn von dem Laderaum aus senkrecht zur Aufnahme in diese hineinblickt. Wird dieser Hinterschnitt von dem wenigstens einen Klemmsteg formschlüssig hintergriffen, kann die Funktionsschiene nicht nur klemmend, sondern bedarfsweise auch formschlüssig, in der Aufnahme gehalten sein. Der Einfachheit halber erstreckt sich der wenigstens eine Hinterschnitt entlang wenigstens im Wesentlichen der gesamten Längserstreckung des Strukturelements.

Um eine ausreichende Klemmkraft zwischen der wenigstens einen Klemmleiste und der Aufnahme bereitzustellen, bietet es sich besonders an, wenn sich der wenigstens eine Klemmsteg wenigstens im Wesentlichen entlang der gesamten Längserstreckung der Funktionsschiene erstreckt. Dabei kann eine zufriedenstellende Klemmung bei einer Funktionsschiene, die als Aluminiumstrangpressprofil ausgebildet ist, erreicht werden, wenn der wenigstens eine Klemmsteg im Querschnitt eine Länge von wenigstens 2,5 mm, vorzugsweise wenigstens 4 mm, insbesondere wenigstens 5 mm, beträgt. Es können also hinreichend lange Klemmstege bereitgestellt werden, ohne dass die Klemmstege jedoch übermäßig lang sein müssen. Die Funktionsschienen können mithin in einer kompakten Aufnahme aufgenommen werden. Zudem reicht bedarfsweise eine Breite des Klemmstegs von höchstens 4 mm, vorzugsweise höchstens 3 mm, insbesondere höchstens 2 mm, aus um die Klemmstege hinreichend widerstandsfähig, flexibel und steif auszubilden, so dass die Klemmstege ihre Funktion zuverlässig erfüllen können.

Um überschüssigen Klebstoff aufnehmen zu können, der ansonsten unkontrolliert austreten würde, ist bedarfsweise zwischen dem wenigstens einen Klemmsteg und der Aufnahme ein Aufnahmeraum für überschüssigen Klebstoff vorgesehen. Dabei kann der Aufnahmeraum in einfacher Weise durch eine entsprechend gebogene Klemmleiste gebildet werden. Alternativ oder zusätzlich kann aber auch an dem dem wenigstens einen Klemmsteg gegenüberliegenden Rand der wenigstens einen Funktionsschiene zwischen der Funktionsschiene und der Aufnahme ein Aufnahmeraum für überschüssigen Klebstoff vorgesehen sein. Auch in dieser Richtung kann aus dem Klebespalt überschüssiger Klebstoff austreten. Dieser lässt sich dann zweckmäßig zur Vermeidung eines unkontrollierten Austretens in dem entsprechenden Aufnahmeraum aufnehmen.

Wenn die Funktionsschiene an einer sich verjüngenden Klebefläche der Aufnahme mit der Aufnahme verklebt wird, dann verengt sich die Aufnahme an dieser Stelle entsprechend, was dazu genutzt werden kann, dass zuverlässig und reproduzierbar eine sichere Klebeverbindung zwischen der Aufnahme und der Funktionsschiene bereitgestellt werden kann. Alternativ oder zusätzlich kann zwischen den beiden Aufnahmeräumen für überschüssigen Klebstoff eine Klebeverbindung zwischen entsprechenden Klebeflächen der Aufnahme und der Funktionsschiene vorgesehen sein. Dies ist im Hinblick auf eine zuverlässige und stabile Verklebung zwischen der Aufnahme und der Funktionsschiene dienlich.

Um Spannungsspitzen im Klemmsteg zu vermeiden und so eine langlebigere und zuverlässigere Verbindung zwischen der Funktionsschiene und der Aufnahme bereitzustellen, kann eine Rinne zwischen dem Klemmsteg und der Rückseite der Funktionsschiene vorgesehen sein. Diese Rinne kann zum weiteren Senken der Spannungsspitzen ohne eine nennenswerte Kante ausgebildet sein.

Um die Funktionsschiene noch sicherer und fester in der Aufnahme zu halten, bevor der Klebstoff zwischen der Funktionsschiene und der Aufnahme ausgehärtet ist, kann es sich anbieten, wenn die wenigstens eine Funktionsschiene zwei Klemmstege aufweist, wobei diese bevorzugt zwei einander gegenüberliegenden Rändern der Funktionsschiene zugeordnet sind. Dann können die Klemmstege eine Klemmung an gegenüberliegenden Seiten der Aufnahme bewirken, wenn die Funktionsschiene in der Aufnahme gefügt ist. Die beiden Klemmstege können derart klemmend in Anlage an gegenüberliegenden Seiten der Aufnahme anliegen, so dass die Funktionsschiene wenigstens teilweise gegenüber einem Auszug aus der Aufnahme in Richtung des Laderaums gesichert ist. Letztlich kann so die Zuverlässigkeit erhöht werden, und zwar insbesondere auch bei nicht unerheblichen zu berücksichtigenden Toleranzen. Um eine noch definiertere und zuverlässigere Montage der Funktionsschiene in der Aufnahme zu erreichen, kann es sich anbieten, wenn die wenigstens eine Aufnahme vom Laderaum aus gesehen zwei von den beiden Klemmstegen formschlüssig hintergriffene Hinterschnitte aufweist. Die Hinterschnitte können sich dabei wenigstens im Wesentlichen entlang der gesamten Längserstreckung der Aufnahme erstrecken. Die wenigstens eine Klemmleiste kann sich bedarfsweise entlang wenigstens im Wesentlichen der gesamten Längserstreckung der Funktionsschiene erstrecken.

Für eine höhere Funktionalität und zur Vereinfachung des Aufbaus kann es zweckmäßig sein, wenn das wenigstens eine Strukturelement wenigstens abschnittsweise zwei zum Laderaum hin offene Aufnahmen aufweist. Diese können dann zur Aufnahme von zwei Funktionsschienen genutzt werden. Dabei bietet es sich weiter an, wenn sich die Aufnahmen wenigstens im Wesentlichen senkrecht zum Ladeboden des Aufbaus erstrecken. So kann die Funktion der Funktionsschienen auf unterschiedlichen Höhen im Laderaum genutzt werden.

Zu Verbesserung der Nutzbarkeit der Funktionsschienen und/oder der Aufnahmen können die Aufnahmen eines Strukturelements wenigstens im Wesentlichen parallel zueinander angeordnet sein. Dabei bietet es sich bei der Verwendung der Funktionsschienen zur Montage von Doppelstockschienen an, wenn die Aufnahmen eines Strukturelements nicht zu weit voneinander entfernt angeordnet sind, um die Ränder voneinander benachbarten Paletten abzustützen. Dies ist beispielsweise zweckmäßig möglich, wenn die Abstände der Aufnahmen eines Strukturelements bzw. die Funktionsschienen in diesen Aufnahmen höchstens 1 m, vorzugsweise höchstens 0,6 m, insbesondere höchstens 0,4 m, voneinander beabstandet angeordnet sind.

Die wenigstens eine Funktionsschiene kann einen hohen Nutzwert bereitstellen, wenn die Funktionsschiene als Ladungssicherungsschiene mit Ladungssicherungsverbindungsmitteln ausgebildet ist, an der die Ladungssicherungsmittel gesichert werden können. Die Ladungssicherungsmittel können beispielsweise Balken, Netze oder Gurte sein, die mit Haken in Öffnungen der Funktionsschiene eingehängt werden. Alternativ oder zusätzlich können die Funktionsschienen aber auch als Doppelstockschienen ausgebildet werden, in denen Doppelstockbalken auf unterschiedlichen Höhen im Laderaum festgelegt werden können. Auf den so montierten Doppelstockbalken können dann beispielsweise Paletten auf einer gegenüber dem Ladeboden erhöhten Ebene abgestellt werden. Zum Festlegen der Doppelstockbalken weisen die Funktionsschienen auch vorzugsweise entsprechende Öffnungen auf.

Die zuvor beschriebenen Vorteile kommen in besonderem Maße bei einschaligen Aufbauten bzw. Seitenwänden zum Tragen. Bei mehrschaligen Seitenwänden, bei denen zwischen zwei Strukturlagen eine innere Kernlage, beispielsweise aus einem geschäumten Kunststoff vorgesehen ist, können die Strukturelemente oder auch direkt die Funktionsschienen in die Kernlage aufgenommen werden. Es kann auch sein, dass die innenliegende Strukturlage so geformt ist, dass eine Aufnahme entsteht, in die eine Funktionsschiene eingeklebt werden kann. Bei einschaligen Seitenwänden bestehen diese Möglichkeiten jedoch nicht oder allenfalls nur sehr bedingt. Dies ist aber tolerierbar, weil die Aufnahmen und damit die Funktionsschienen in separaten Strukturelementen vorgesehen werden können.

Bei solchen einschaligen Aufbauten weist der Aufbau wenigstens eine feste Seitenwand auf, wobei diese wenigstens eine Seitenwand ein sich über wenigstens im Wesentlichen die gesamte Länge und wenigstens im Wesentlichen die gesamte Höhe der Seitenwand erstreckendes Seitenwandpaneel umfasst. Zur Aussteifung der Seitenwand sind zudem noch zwischen den seitlichen Rändern des Seitenwandpaneels eine Mehrzahl von wenigstens im Wesentlichen quer zur Längsrichtung des Seitenwandpaneels ausgerichtete voneinander beabstandete Strukturelemente in Form von Ständerelementen vorgesehen. Dabei können diese Ständerelemente in besonders bevorzugter Ausgestaltung dazu ausgebildet sein, das Großteil des Gewichts des Dachs des Aufbaus zu tragen und gegenüber dem Ladeboden abzustützen.

Aus Gründen der Stabilität und der Funktionalität erstreckt sich das wenigstens eine Strukturelemente bzw. das wenigstens eine Ständerelement wenigstens im Wesentlichen über die gesamte Höhe der Seitenwand und/oder des Seitenwandpaneels. Dann kann das Dach wenigstens im Wesentlichen auf dem Strukturelement ruhen, um den Rest der Seitenwand zu entlasten. Alternativ oder zusätzlich können wenigstens zwei Strukturelemente, insbesondere Ständerelemente, an einander gegenüberliegenden Seitenwänden des Aufbaus wenigstens im Wesentlichen einander gegenüberliegend vorgesehen sein. Dann kann beispielsweise eine Ladungssicherung bequem zu beiden Seiten des Aufbaus erfolgen. Alternativ oder zusätzlich kann aber auch ein Doppelstockbalken quer durch den Laderaum geführt und an seinen beiden Enden an den gegenüberliegenden Seitenwänden, und zwar an dort vorgesehenen Funktionsschienen, festgelegt werden.

Die Nutzbarkeit des Aufbaus wird grundsätzlich erhöht, wenn die jeweils benachbarten Strukturelemente, insbesondere Ständerelemente, der Seitenwand einen wenigstens im Wesentlichen konstanten Abstand zueinander aufweisen. Dann können in immer gleichen Abständen Funktionsschienen zur Verfügung stehen, was die Planung der Ladungssicherung und damit das Laden selbst vereinfacht. Wenn die Strukturelemente, insbesondere Ständerelemente, der Seitenwand gleichartig ausgebildet sind, vereinfachen sich die Konstruktion und die Fertigung des Aufbaus. Sind die Strukturelemente, insbesondere Ständerelemente, an den Seitenwänden gegenüberliegend angeordnet, vereinfacht dies insbesondere auch das Beladen von Paletten auf zwei Ebenen übereinander.

Die zuvor beschriebenen Vorteile kommen in besonderem Maße zum Tragen, wenn die Seitenwand einschalig ausgebildet ist und das Seitenwandpaneel auf lediglich einer Seite des wenigstens einen Strukturelements, insbesondere Ständerelements, der Seitenwand vorgesehen ist. Dies hat auch einen einfachen, kostengünstigen und leichten Aufbau zur Folge. Das Seitenwandpaneel kann dann bedarfsweise zusätzlich zwischen Strukturelementen, insbesondere Ständerelementen, vom Laderaum wenigstens abschnittsweise, insbesondere überwiegend, zugänglich sein. Dies kann zu einer zweckmäßigen Ausgestaltung des Aufbaus in konstruktiver Hinsicht führen. Gleiches ist alternativ oder zusätzlich der Fall, wenn die Strukturelemente, insbesondere Ständerelemente, vom Laderaum wenigstens abschnittsweise, insbesondere überwiegend, zugänglich sind.

Nachfolgend wird die Erfindung anhand einer lediglich ein Ausführungsbeispiel darstellenden Zeichnung näher erläutert. In der Zeichnung zeigt
- Fig. 1: ein erfindungsgemäßes Nutzfahrzeug mit einem erfindungsgemäßen Aufbau in einer perspektivischen Ansicht,
- Fig. 2: ein Detail des Aufbaus aus Fig. 1 in einer perspektivischen Ansicht,
- Fig. 3: ein Detail eines Strukturelements aus Fig. 2 mitsamt der zugehörigen Funktionsschienen in einer perspektivischen Ansicht und
- Fig. 4: ein Detail einer Verbindung zwischen einer Funktionsschiene und des Strukturelements aus Fig. 3.

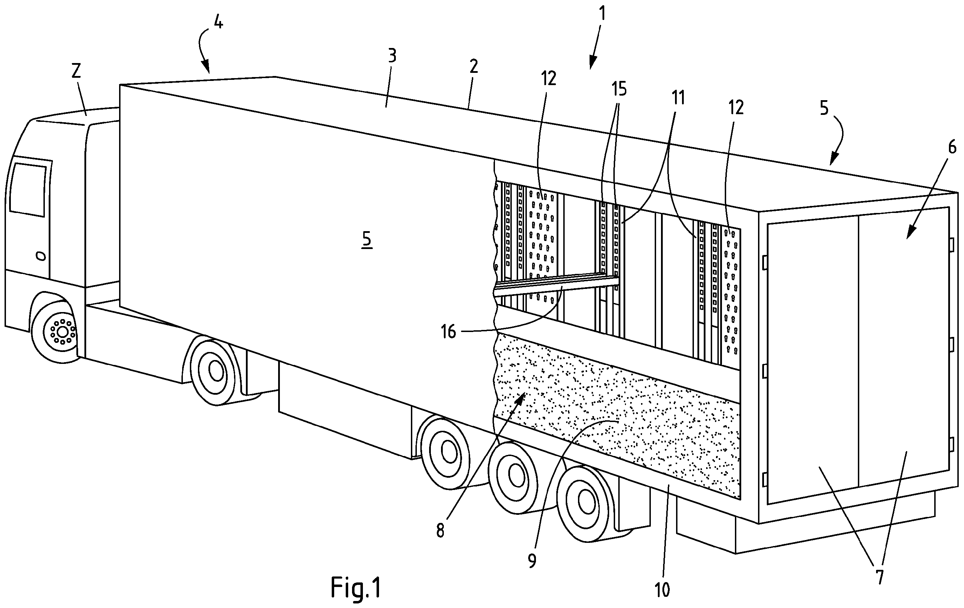

In der Fig. 1 ist ein Nutzfahrzeug 1 mit einem Aufbau 2 in Form eines Kofferaufbaus in einer perspektivischen Ansicht dargestellt, das von einer Zugmaschine Z gezogen wird. Der Aufbau 2 umfasst ein festes Dach 3, eine feste Stirnwand 4, zwei feste Seitenwände 5 und eine feste Rückwand 6, die im Wesentlichen durch zwei Flügeltüren 7 gebildet wird. Zudem umfasst der Aufbau einen Laderaum 8, der nach unten durch einen Ladeboden 9 einer Bodenstruktur 10 begrenzt wird, wobei der Ladeboden 9 dem Aufstellen von Ladung dient. An den Seitenwänden 5 sind Strukturelemente 11 in Form von Ständerelementen vorgesehen, die sich wenigstens im Wesentlichen senkrecht zum Ladeboden 9 und wenigstens im Wesentlichen über die gesamte Höhe der Seitenwand 5 erstrecken. Auf diese Weise dienen diese Strukturelemente 11 dem Abstützen des Dachs 3 gegenüber dem Ladeboden 9 und zur Aussteifung der Seitenwände 5, weshalb sie bei dem dargestellten und insoweit bevorzugten Aufbau auch als Ständerelemente bezeichnet werden können.

Zwischen den Strukturelementen 11 können Platten 12 verbaut sein, die Öffnungen 13 zum Einhängen von Ladungssicherungsmitteln aufweisen. Die Ladungssicherungsmittel sind dabei bevorzugt Spanngurte mit Haken, die in Öffnungen der Platten 12 eingreifen können. Diese Platten 12 wären aber grundsätzlich auch verzichtbar. Die Strukturelemente 11 weisen zwei Aufnahmen 14 auf, in denen jeweils eine Funktionsschiene 15 aufgenommen ist. Die Funktionsschienen 15 sind bei dem dargestellten und insoweit bevorzugten Aufbau 2 als Doppelstockschienen ausgebildet. Die Doppelstockschienen können dabei auf unterschiedlichen Höhen in dafür vorgesehenen Öffnungen Doppelstockbalken 16 halten, die sich quer durch den Laderaum 8 erstrecken und mit ihren gegenüberliegenden Enden in Funktionsschienen 15 an gegenüberliegenden Seitenwänden 5 festgelegt sind.

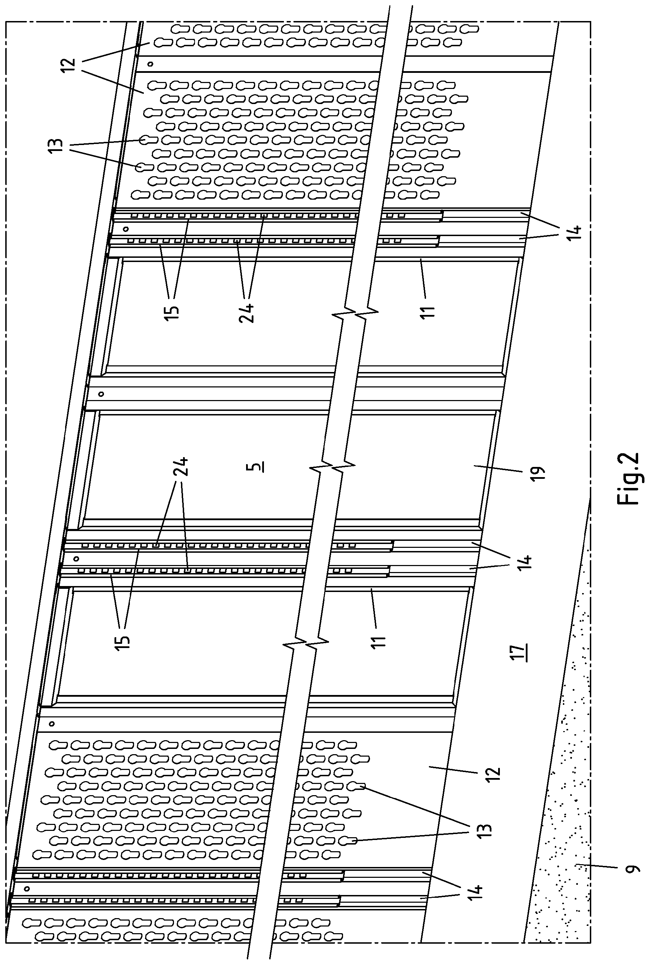

In der Fig. 2 ist ein Detail des Aufbaus 2 dargestellt, das ein Teil einer Seitenwand 5 umfasst. Der besseren Übersichtlichkeit halber ist jedoch nur der obere und der untere Abschnitt des entsprechenden Teils der Seitenwand 5 dargestellt. Im unteren Bereich der Seitenwand 5 ist angrenzend zum Ladeboden 9 eine Sockelscheuerleiste 17 angebracht, hinter der sich die Strukturelemente 11 der Seitenwand 5 bis zum Ladeboden 9 erstrecken. Das obere Ende der Strukturelemente 11 ist mit dem oberen Längsholm 18 des Dachs 3 an der entsprechenden Seitenwand 5 verbunden. Das Dach 3 ist der besseren Übersichtlichkeit halber nicht dargestellt. Die Seitenwand 5 ist zudem einschalig ausgebildet. Die Seitenwand 5 umfasst auf der zur Außenseite des Aufbaus 2 weisenden Seite der Seitenwand 5 ein Seitenwandpaneel 19, das sich über die gesamte Länge und die gesamte Höhe der Seitenwand 5 erstreckt. In regelmäßigen Abständen umfasst die Seitenwand 5 zudem die Strukturelemente 11 in Form von Ständerelementen. Dabei ist die Seitenwand 5 vom Laderaum 8 aus grundsätzlich zwischen den Strukturelementen 11 zugänglich. Die der Ladungssicherung dienenden Platten 12 können bedarfsweise demontiert werden. Die Strukturelemente 11, welche bei dem dargestellten und insoweit bevorzugten Aufbau 2 gleichartig ausgebildet sind, sind selbst ebenfalls jeweils vom Laderaum 8 aus zugänglich. Eine innere Decklage zwischen der und dem Seitenwandpaneel 19 eine Kernlage aus einem geschäumten Kunststoff aufgenommen sein könnte, ist nicht vorgesehen.

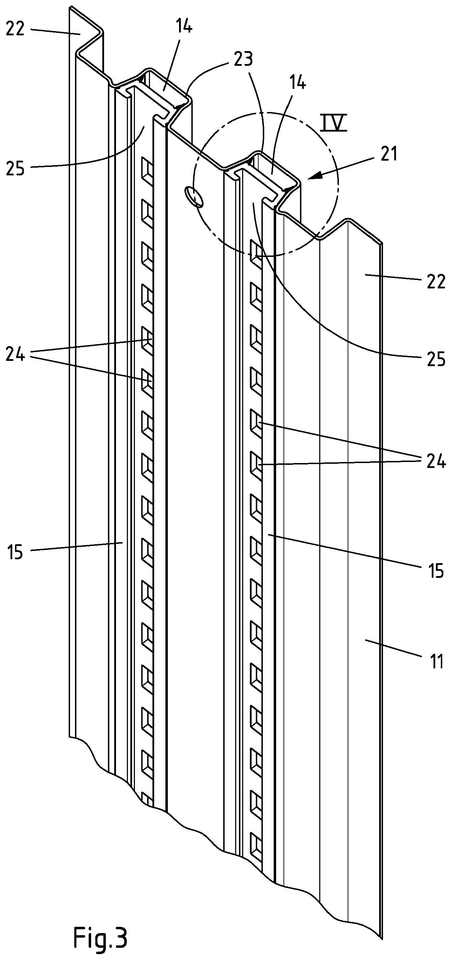

In der Fig. 3 ist ein Strukturelement 11 in Form eines Ständerelements dargestellt. Das Strukturelement 11 weist zwei zum Laderaum 8 hin offene Aufnahmen 14 auf, die sich bei dem dargestellten und insoweit bevorzugten Strukturelement 11 wenigstens im Wesentlichen entlang der gesamten Längserstreckung des Strukturelements 11 erstrecken. Zudem ist jede der beiden Aufnahmen 14 in einem Profilabschnitt vorgesehen, der die Form eines Hutprofils 21 aufweist. Die Aufnahmen 14 sind gleichartig zueinander und zudem parallel zueinander ausgebildet. Das dargestellte und insoweit bevorzugte Strukturelement 11 kann im Wege des Rollierens aus einem Stahlblech gebildet worden sein, ohne dass dies jedoch zwingend erforderlich wäre. Das dargestellte und insoweit bevorzugte Strukturelement 11 weist an seinen seitlichen Rändern Flansche 2 auf, mit denen das Strukturelement 11 rückseitig mit der Seitenwand 5 verbunden, insbesondere verklebt, werden kann. Die einzelnen Aufnahmen 14 weisen einen U-förmigen Querschnitt 23 auf, der sich bei dem dargestellten und insoweit bevorzugten Strukturelement 11 wenigstens im wesentlich unverändert über wenigstens im Wesentlichen die gesamte Längserstreckung des Strukturelements 11 erstreckt. Dabei ist die Aufnahme 14 als geschlossenes Profilelement ausgebildet, das mithin keine Öffnungen aufweist.

Zum Bereitstellen von Öffnungen 24 für die Montage von Ladungssicherungsmitteln und/oder Doppelstockbalken 16 sind in den beiden Aufnahmen 14 die Funktionsschienen 15 eingelassen, und zwar soweit, dass die Funktionsschienen 15 nicht gegenüber dem Strukturelement 11 in den Laderaum 8 vorstehen. Die Öffnungen 24 sind in einem Bodenabschnitt 25 der Funktionsschiene 15 eingelassen und über eine T-Nut 26 zugänglich. In die T-Nut können formschlüssig Verbindungsmittel eines Doppelstockbalkens 16 eingesetzt werden, so dass der Doppelstockbalken 16 nicht ohne Weiteres aus der Funktionsschiene 15 in Richtung des Laderaums 8 ausgezogen werden kann. Das Verbindungsmittel greift zudem formschlüssig in eine Öffnung 24 der Funktionsschiene 15 ein und wird damit in Schwerkraftrichtung in der Öffnung 24 gehalten. In den Funktionsschienen 15 sind in regelmäßigen Abständen entlang der Funktionsschiene 15 Öffnungen 24 vorgesehen, die bei den dargestellten und insoweit bevorzugten Funktionsschienen 15 rechteckig oder quadratisch ausgebildet sind. Die beiden Funktionsschienen 15 des dargestellten Strukturelements 11 sind gleichartig ausgebildet, und zwar ebenso wie die Aufnahmen 14. Es ist daher nicht entscheidend, welche Funktionsschiene 15 in welche Aufnahme 14 eingesetzt wird.

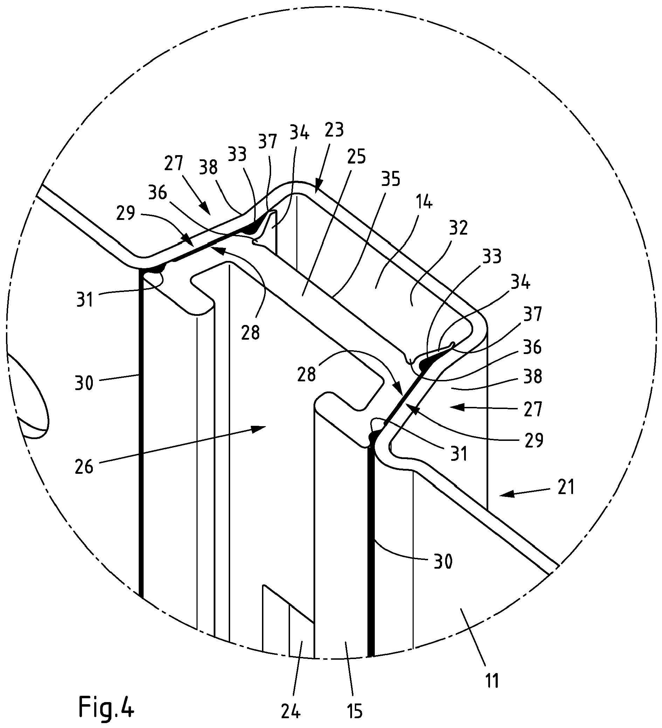

In der Fig. 4 ist die Aufnahme 14 mit der darin aufgenommenen Funktionsschiene 15 im Detail dargestellt. Die Aufnahme 14 weist einen sich beidseitig verjüngenden Abschnitt 27 auf. In diesem sich verjüngenden Abschnitt 27 sind zwei die Aufnahme 14 verjüngende und gegenüberliegende Klebeflächen 28 vorgesehen, mit denen die Aufnahme 14 mit korrespondierend ausgebildeten Klebeflächen 29 der Funktionsschiene 15 über einen Klebstoff 30 verklebt ist. Angrenzend an die Klebeflächen 28,29 der Funktionsschiene 15 und der Aufnahme 14 in Richtung des Laderaums 8 sind Aufnahmeräume 31 für überschüssigen Klebstoff vorgesehen, so dass überschüssiger Klebstoff 30 nicht unkontrolliert austritt. Angrenzend an die Klebeflächen 28,29 der Aufnahme 14 und der Funktionsschiene 15 in Richtung des Bodens 32 der Aufnahme 14 ist jeweils ein weiterer Aufnahmeraum 33 für überschüssigen Klebstoff 30 vorgesehen.

Diese hinteren Aufnahmeräume 33 werden von der Aufnahme 14 und von Klemmstegen 34 der Funktionsschiene 15 gebildet. Die Klemmstege 34 der Funktionsschiene 15 sind gegenüberliegenden Seiten der Funktionsschiene 15 und deren Rückseite 35 zugeordnet. Die Klemmstege 34 stehen nach hinten in Richtung eines freien Endes der Klemmstege 34 gegenüber der Funktionsschiene 15 vor. Dabei sind die Klemmstege 34 in Richtung der Aufnahme 14 geschwungen ausgeführt, um in diesem Bereich die hinteren Aufnahmeräume 33 bereitstellen zu können. Von den Innenseiten der Aufnahme 14 wegweisend schließen sich an die Klemmstege 34 Rinnen 36 an. Den freien Enden der Klemmstege 34 sind Klemmflächen 37 zugeordnet, mit denen die Klemmstege 34 klemmend an den Innenseiten der Aufnahme 14 anliegen. Infolge dieser Klemmung sitzt die Funktionsschiene 15 auch dann zuverlässig und ortsfest in der Aufnahme 14, wenn der Klebstoff 30 zwischen der Funktionsschiene 15 und der Aufnahme 14 noch nicht ausgehärtet ist.

Von der Öffnung 24 der Aufnahme 14 zum Laderaum 8 aus gesehen, sind in der Aufnahme 14 an gegenüberliegenden Seiten jeweils ein Hinterschnitt 38 vorgesehen. Die Hinterschnitte 38 werden von den Klemmstegen 34 formschlüssig hintergriffen. Die Länge der Klemmstege 34 in Richtung des Bodens 32 der Aufnahme 14 beträgt bei der dargestellten und insoweit bevorzugten Funktionsschiene 15 zwischen 5 mm und 7 mm. Die Breite der Klemmstege 34 quer dazu beträgt zwischen 0,5 mm und 1,5 mm. Die Klemmstege 34 erstrecken sich wenigstens im Wesentlichen über die gesamte Länge der aus Alustrangpressprofil ausgebildeten Funktionsschiene 15. Die Klemmstege 34 hintergreifen zudem die Hinterschnitte 38 der Aufnahme 14, die sich wenigstens im Wesentlichen über die gesamte Längserstreckung der Aufnahme 14 erstrecken, über wenigstens im Wesentlichen die gesamte Länge der Klemmstege 34.

### Bezugszeichenliste

- 1: Nutzfahrzeug
- 2: Aufbau
- 3: Dach
- 4: Stirnwand
- 5: Seitenwand
- 6: Rückwand
- 7: Flügeltür
- 8: Laderaum
- 9: Ladeboden
- 10: Bodenstruktur
- 11: Strukturelement
- 12: Platte
- 13: Öffnung
- 14: Aufnahme
- 15: Funktionsschiene
- 16: Doppelstockbalken
- 17: Sockelscheuerleiste
- 18: Längsholm
- 19: Seitenwandpaneel
- 21: Hutprofil
- 22: Flansch
- 23: U-Querschnitt
- 24: Öffnung
- 25: Bodenabschnitt
- 26: T-Nut
- 27: verjüngter Abschnitt
- 28: Klebefläche
- 29: Klebefläche
- 30: Klebstoff
- 31: Aufnahmeraum
- 32: Boden
- 33: Aufnahmeraum
- 34: Klemmsteg
- 35: Rückseite
- 36: Rinne
- 37: Klemmfläche
- 38: Hinterschnitt
- Z: Zugmaschine

## Patentansprüche

1. Aufbau (2) eines Nutzfahrzeugs (1), insbesondere Lastkraftwagen, Anhänger oder Sattelauflieger, umschließend einen Laderaum (8), insbesondere in Form eines Kofferaufbaus, mit einem Ladeboden (9) und wenigstens einem an einer Seitenwand (5) des Aufbaus (2) vorgesehenen Strukturelement (11) und wenigstens einer sich an dem wenigstens einen Strukturelement (11) abstützenden Funktionsschiene (15), wobei das wenigstens eine Strukturelement (11) wenigstens abschnittsweise eine sich wenigstens im Wesentlichen senkrecht zum Ladeboden (9) des Aufbaus (2) erstreckende und zum Laderaum (8) hin offene Aufnahme (14) aufweist, wobei die wenigstens eine Funktionsschiene (15) in der Aufnahme (14) aufgenommen und mit der Aufnahme (14) verklebt ist, wobei die wenigstens eine Funktionsschiene (15) als Alustrangpressprofil ausgebildet ist,
**dadurch gekennzeichnet, dass**
die wenigstens eine Funktionsschiene (15) wenigstens einen Klemmsteg aufweist und dass der wenigstens eine Klemmsteg (34) derart klemmend in Anlage an der Aufnahme (14) anliegt, so dass die Funktionsschiene (15) wenigstens teilweise gegenüber einem Auszug aus der Aufnahme (14) in Richtung des Laderaums (8) gesichert ist.

2. Aufbau nach Anspruch 1,
**dadurch gekennzeichnet, dass**
die wenigstens eine Aufnahme (14) in einem Querschnitt (23) senkrecht zur Längserstreckung der Aufnahme (14) wenigstens im Wesentlichen U-förmig, insbesondere als Hutprofil (21), ausgebildet ist und/oder dass die wenigstens eine Aufnahme (14) vom Laderaum (8) aus gesehen wenigstens einen von dem wenigstens einen Klemmsteg (34) formschlüssig hintergriffenen Hinterschnitt (38) aufweist.

3. Aufbau nach Anspruch 1 oder 2,
**dadurch gekennzeichnet, dass**
sich der wenigstens eine Klemmsteg (34) wenigstens im Wesentlichen entlang der gesamten Längserstreckung der Funktionsschiene (15) erstreckt und/oder dass der wenigstens eine Klemmsteg (34) im Querschnitt eine Länge von wenigstens 2,5 mm, vorzugsweise wenigstens 4 mm, insbesondere wenigstens 5 mm und/oder eine Breite von höchstens 4 mm, vorzugsweise höchstens 3 mm, insbesondere höchstens 2 mm, aufweist.

4. Aufbau nach einem der Ansprüche 1 bis 3,
**dadurch gekennzeichnet, dass**
zwischen dem wenigstens einen Klemmsteg (34) und der Aufnahme (14) ein Aufnahmeraum (33) für überschüssigen Klebstoff (30) gebildet ist und/oder dass an der dem wenigstens einen Klemmsteg (34) gegenüberliegenden Rand der Funktionsschiene (15) zwischen der Funktionsschiene (15) und der Aufnahme (14) ein Aufnahmeraum (31) für überschüssigen Klebstoff (30) gebildet ist.

5. Aufbau nach einem der Ansprüche 1 bis 4,
**dadurch gekennzeichnet, dass**
die Funktionsschiene (15) an einer sich verjüngenden Klebefläche (28) der Aufnahme (14) mit der Aufnahme (14) verklebt ist und/oder dass zwischen den beiden Aufnahmeräumen (31,33) eine Klebeverbindung zwischen Klebeflächen (28,29) der Aufnahme (14) und der Funktionsschiene (15) vorgesehen ist.

6. Aufbau nach einem der Ansprüche 1 bis 5,
**dadurch gekennzeichnet, dass**
eine Rinne (36) zwischen dem Klemmsteg (34) und der Rückseite (35) der Funktionsschiene (15) vorgesehen ist.

7. Aufbau nach einem der Ansprüche 1 bis 6,
**dadurch gekennzeichnet, dass**
die wenigstens eine Funktionsschiene (15) zwei einander gegenüberliegenden Rändern zugeordnete Klemmstege (34) aufweist und dass die Klemmstege (34) derart klemmend in Anlage an gegenüberliegenden Seiten der Aufnahme (14) anliegen, so dass die Funktionsschiene (15) wenigstens teilweise gegenüber einem Auszug aus der Aufnahme (14) in Richtung des Laderaums (8) gesichert ist und dass, vorzugsweise, die wenigstens eine Aufnahme (14) vom Laderaum (8) aus gesehen zwei von den beiden Klemmstegen (34) formschlüssig hintergriffene Hinterschnitte (38) aufweist.

8. Aufbau nach einem der Ansprüche 1 bis 7,
**dadurch gekennzeichnet, dass**
das wenigstens eine Strukturelement (11) wenigstens abschnittsweise zwei sich wenigstens im Wesentlichen senkrecht zum Ladeboden (9) des Aufbaus (2) erstreckende und zum Laderaum (8) hin offene Aufnahmen (14) aufweist und dass, vorzugsweise, sich an dem wenigstens einen Strukturelement (11) in beiden Aufnahmen (14) eine Funktionsschiene (15) abstützt.

9. Aufbau nach Anspruch 8,
**dadurch gekennzeichnet, dass**
die Aufnahmen (14) eines Strukturelements (11) wenigstens im Wesentlichen parallel zueinander angeordnet sind und/oder dass die die Aufnahmen (14) eines Strukturelements (11) höchstens 1 m, vorzugsweise höchstens 0,6 m, insbesondere höchstens 0,4 m, voneinander beabstandet sind.

10. Aufbau nach einem der Ansprüche 1 bis 9,
**dadurch gekennzeichnet, dass**
die Funktionsschiene (15) als Ladungssicherungsschiene mit Ladungssicherungsverbindungsmitteln, insbesondere Öffnungen (24) zum Einhaken von Ladungssicherungsmitteln, vorgesehen ist und/oder dass die Funktionsschiene (15) als Doppelstockschiene zur Aufnahme eines Doppelstockbalkens (16) ausgebildet ist.

11. Aufbau nach einem der Ansprüche 1 bis 10,
**dadurch gekennzeichnet, dass**
der Aufbau (2) wenigstens eine feste, ein sich über wenigstens im Wesentlichen die gesamte Länge und wenigstens im Wesentlichen die gesamte Höhe der Seitenwand (5) erstreckendes Seitenwandpaneel (19) umfassende Seitenwand (5) aufweist, dass die Seitenwand (5) zwischen den seitlichen Rändern des Seitenwandpaneels (19) eine Mehrzahl von wenigstens im Wesentlichen quer zur Längsrichtung des Seitenwandpaneels (19) ausgerichtete voneinander beabstandete Strukturelemente (11) in Form von Ständerelementen aufweist.

12. Aufbau nach einem der Ansprüche 1 bis 11,
**dadurch gekennzeichnet, dass**
sich das wenigstens eine Strukturelemente (11), insbesondere die Ständerelemente, wenigstens im Wesentlichen über die gesamte Höhe der Seitenwand (5) und/oder des Seitenwandpaneels (19) erstreckt und/oder dass wenigstens zwei Strukturelemente (11), insbesondere Ständerelemente, an einander gegenüberliegenden Seitenwänden (5) des Aufbaus (2) wenigstens im Wesentlichen einander gegenüberliegend vorgesehen sind.

13. Aufbau nach Anspruch 11 oder 12,
**dadurch gekennzeichnet, dass**
die jeweils benachbarten Strukturelemente (11), insbesondere die Ständerelemente, der Seitenwand (5) einen wenigstens im Wesentlichen konstanten Abstand zueinander aufweisen und/oder dass die Strukturelemente (11), insbesondere die Ständerelemente, der Seitenwand (5) gleichartig ausgebildet sind.

14. Aufbau nach einem der Ansprüche 1 bis 13,
**dadurch gekennzeichnet, dass**
die Seitenwand (5) einschalig ausgebildet ist, dass das Seitenwandpaneel (19) auf lediglich einer Seite des wenigstens einen Strukturelements (11), insbesondere Ständerelements, der Seitenwand (5) vorgesehen ist und dass, vorzugsweise, das Seitenwandpaneel (19) zwischen Strukturelementen (11), insbesondere Ständerelementen, und/oder die Strukturelemente (11), insbesondere Ständerelemente, vom Laderaum (8) wenigstens abschnittsweise, insbesondere überwiegend, zugänglich ist/sind.

15. Nutzfahrzeug (1), insbesondere Lastkraftwagen, Anhänger oder Sattelauflieger, mit einem Aufbau (2),
**dadurch gekennzeichnet, dass**
der Aufbau (2) nach einem der Ansprüche 1 bis 14 ausgebildet ist.
